Europäisches Patentamt

European Patent Office

Office européen des brevets

(11) Veröffentlichungsnummer: **0 405 288 A1**

## EUROPÄISCHE PATENTANMELDUNG

(21) Anmeldenummer: 90111503.0

(22) Anmeldetag: 19.06.90

(51) Int. Cl.5: **C01B 13/02**, B01D 71/02

(30) Priorität: 29.06.89 DE 3921390

(43) Veröffentlichungstag der Anmeldung:
02.01.91 Patentblatt 91/01

(84) Benannte Vertragsstaaten:
BE CH DE FR GB LI

(71) Anmelder: MERCK PATENT GESELLSCHAFT
MIT BESCHRÄNKTER HAFTUNG
Frankfurter Strasse 250 Postfach 4119
D-6100 Darmstadt(DE)

(72) Erfinder: Bauer, Gerd, Dr.
Windausweg 33
D-6100 Darmstadt(DE)
Erfinder: Krauss, Helmuth, Dr.
Paul-Sieben-Weg 4
D-6140 Bensheim-Auerbach(DE)
Erfinder: Kuntz, Matthias, Dr.
Tannenweg 6
D-6109 Mühltal-Traisa(DE)

(54) Verfahren und Vorrichtung zur Gewinnung von reinem Sauerstoff.

(57) Die Anmeldung betrifft ein Verfahren und eine Vorrichtung zur Gewinnung von reinem Sauerstoff unter Verwendung von gasdichten Membranen (4), die sowohl eine Elektronen- als auch eine Sauerstoffionenleitung aufweisen.

FIG. 1

EP 0 405 288 A1

# VERFAHREN UND VORRICHTUNG ZUR GEWINNUNG VON REINEM SAUERSTOFF

Die Anmeldung betrifft ein Verfahren und eine Vorrichtung zur Gewinnung von reinem Sauerstoff aus sauerstoffenthaltenden Gasgemischen.

Sauerstoff wird in vielen Bereichen der Technik in großen Mengen benötigt, insbesondere für Oxidations- und Verbrennungsprozesse. Das großtechnisch übliche Verfahren basiert auf der fraktionierten Kondensation von Luft im sogenannten Linde-Verfahren. Daneben kennt man sowohl chemische als auch elektrochemische Verfahren.

Eine bekannte elektrochemische Sauerstoffpumpe besteht aus einer Membran, die eine Leitfähigkeit für Sauerstoffionen aufweist und beidseitig mit porösen Elektroden beschichtet ist. Durch Anlegen einer Spannung wird dabei an der Kathode Sauerstoff zu Sauerstoffionen reduziert, die durch die Membran zur Anode wandern und dort wieder zu Sauerstoff oxidiert werden. Auf diese Weise kann aus dem mit einem sauerstoffenthaltenden Gas gespülten Kathodenraum reiner Sauerstoff in den Anodenraum gepumpt werden.

Der Wirkungsgrad solcher Zellen beträgt aufgrund von Elektrodenpolarisation und anderen Energieverlusten nur etwa 60 %. Berücksichtigt man die Verluste bei der Her stellung und dem Transport von Strom, so ergibt sich ein Gesamtwirkungsgrad von nur etwa 20 %.

Es bestand daher die Aufgabe, ein Verfahren zur Gewinnung von reinem Sauerstoff zu finden, das einerseits nicht den nur in großtechnischen Anlagen zu verwirklichenden Aufwand des Linde-Verfahrens benötigt und das andererseits mit gutem Wirkungsgrad in praktisch beliebig zu dimensionierenden einfachen Anlagen abläuft.

Es wurde nun gefunden, daß diese Aufgabe durch den Einsatz von Membranen, die sowohl eine Elektronenleitfähigkeit als auch eine Leitfähigkeit für Sauerstoffionen aufweisen, gelöst werden kann.

Gegenstand der Erfindung ist daher eine Vorrichtung zur Gewinnung von reinem Sauerstoff aus sauerstoffenthaltenden Gasgemischen, im wesentlichen bestehend aus einem ersten Gasraum mit einem Einlaß und einem Auslaß für das sauerstoffenthaltende Gasgemisch, einem zweiten Gasraum mit einem Auslaß für reinen Sauerstoff, einer die beiden Gasräume trennenden Membran, die eine Leitfähigkeit sowohl für Sauerstoffionen als auch für Elektronen aufweist, und Mitteln zur Erzeugung einer Sauerstoffpartialdruckdifferenz zwischen den beiden Gasräumen.

Gegenstand der Erfindung ist auch ein Verfahren zur Gewinnung von reinem Sauerstoff aus sauerstoffenthaltenden Gasgemischen, das dadurch gekennzeichnet ist, daß man das sauerstoffenthaltende Gasgemisch in einen ersten Gasraum bringt, der durch eine gasdichte aber Elektronen und Sauerstoffionen leitende Membran von einem zweiten Gasraum abgetrennt ist, daß man durch Erzeugung eines Überdrucks im ersten Gasraum und/oder Erzeugung eines Unter drucks im zweiten Gasraum für eine positive Druckdifferenz zwischen erstem und zweitem Gasraum sorgt und daß man reinen Sauerstoff aus dem zweiten Gasraum abzieht.

Schließlich ist Gegenstand der Erfindung auch die Verwendung von Membranen mit Elektronen- und Sauerstoffionenleitfähigkeit in Verfahren zur Gewinnung von reinem Sauerstoff.

Das der vorliegenden Erfindung zugrundeliegende Prinzip besteht darin, daß in zwei Gasräumen, die durch eine zwar gasdichte aber sowohl Elektronen als auch Sauerstoffionen leitende Membran getrennt sind, unterschiedliche Sauerstoffpartialdrücke erzeugt werden, wodurch eine große chemische Potentialdifferenz erzeugt wird. Ein Ausgleich dieser chemischen potentialdifferenz ist nur möglich, wenn Sauerstoff von dem Gasraum mit höherem Partialdruck in den Gasraum mit niedrigerem Partialdruck transportiert wird. Da die Membran gasdicht ist, kann dies nur durch den Transport von Sauerstoffionen geschehen.

Dazu muß der Sauerstoff auf der sauerstoffreichen Seite Elektronen aus der Membran aufnehmen und in ionische Form übergehen und entsprechend auf der sauerstoffarmen Seite durch Abgabe von Elektronen in die neutrale Form übergehen. Es findet also in dem Mischleiter eine Wanderung von Sauerstoffionen von der sauerstoffreichen zur sauerstoffarmen Seite der Membran statt und eine Elektronenwanderung in entgegengesetzter Richtung.

Motor dieser Sauerstoffpumpe ist allein die Sauerstoffpartialdruckdifferenz zwischen den beiden Seiten der Membran. Im Sinne einer optimalen Verfahrensweise wird man also dafür Sorge tragen, daß dieser Differenzdruck möglichst groß ist. Dies kann durch Verdichten des sauerstoffenthaltenden Gasgemisches und/oder Verminderung des Druckes in dem den reinen Sauerstoff enthaltenden Gasraum geschehen. Beispielsweise kann mit einfachen Kompressoren ein Druck von 5-15 bar erzeugt werden, was bei Verwendung von Luft als sauerstoffenthaltendem Gasgemisch einem Sauerstoffpartialdruck von etwa 1-3 bar entspricht. Durch Verminderung des Druckes auf der Produktseite auf etwa 5-20 mbar kann eine ausreichende Potentialdifferenz erzeugt werden.

Als Material für eine erfindungsgemäße Membran kommen insbesondere Keramik-Materialien mit den geforderten Mischleitereigenschaften in Frage. Solche Materialien sind bekannt und insbesondere unter Mischoxid-Keramik-Materialien zu finden, wie zum Beispiel $BaFe_{0,5}Co_{0,5}YO_3$ gelbes Bleioxid, $ThO_2$ oder $Sm_2O_3$-dotiertes $ThO_2$, $MoO_3$- oder $Er_2O_3$-dotiertes $Bi_2O_3$, $Gd_2Zr_2O_7$, $CaTi_{1-x}M_xO_{3-\alpha}$ (M = Fe, Co, Ni), $SrCeO_3$ und $YBa_2Cu_3O_{7-x}$. Diese Materialien werden in der Regel durch Mischen der Oxidbestandteile und anschließendes Sintern oder durch Reaktionssinterverfahren hergestellt. Ein besonders gut geeignetes Material ist auch ein Material der Zusammensetzung $(VO)_2P_2O_7$ das durch Kopräzipitation, gegebenenfalls nach vorher Reduktion, und anschließendes Sintern hergestellt werden kann und das besonders hohe Leitfähigkeiten aufweist.

Die Leitfähigkeit dieser Membranen für Sauerstoffionen ist in der Regel temperaturabhängig und häufig werden optimale Werte erst bei höheren Temperaturen erreicht, die durchaus im Bereich von 400-1100 °C liegen können. Um einen möglichst schnellen Sauerstoffdurchsatz zu erhalten, sollte nicht nur bei hohen Temperaturen, sondern auch mit möglichst dünnen, trotzdem jedoch gasdichten und mechanisch stabilen Membranen gearbeitet werden.

Gasdicht sind solche Keramikmaterialien in der Regel dann, wenn sie eine hohe Dichte von deutlich über 90 % der theoretischen Dichte und weder Risse noch eine durchgehende Porosität aufweisen. In diesem Fall besteht Gasdichtheit bereits bei Dicken von etwa 10-100 nm.

Um Membranen dieser Dicke auch mechanisch ausreichend zu stabilisieren, wird das Keramikmaterial vorzugsweise auf einen porösen Träger aufgebracht. Bei ausreichender Stabilität der Membran kann jedoch auch ohne einen stützenden Träger gearbeitet werden.

In Figur I ist rein schematisch die Funktionsweise der erfindungsgemäßen Vorrichtung angedeutet. Darin ist mit (1) der das sauerstoffenthaltende Gasgemisch, zum Beispiel Luft, enthaltende erste Gasraum bezeichnet, der über einen Gaseinlaß (2) und einen Gasauslaß (3) verfügt. Der Gasraum (1) ist durch die Membran (4) vom Gasraum (5) getrennt, der über den Sauerstoffauslaß (6) verfügt.

In der Praxis wird man eine Anlage zur Sauerstoffgewinnung vorzugsweise so bauen, daß eine möglichst große Membranfläche zur Verfügung steht. Dazu kann die anlage beispielsweise analog einem Rohr- oder Plattenwärmetauscher gebaut werden. Ein Beispiel einer solchen bevorzugten Ausführungsform ist in Figur II gezeigt. Über einen Verdichter (11) und einem Wärmetauscher (12) zum Aufheizen wird ein sauerstoffenthaltendes Gas, zum Beispiel Luft, in den ersten Gasraum (13), der durch das Gehäuse (14) gebildet wird, gedrückt, umströmt dort die Membranrohre (15) und wird über eine Drossel (16), eine Durchflußmeßzelle (17) und einen Wärmetauscher (18) zum Abkühlen des Gasgemisches wieder ins Freie befördert. Der zweite Gasraum (19) ist einerseits durch die Membranrohre (15) und andererseits durch den mit dem Gehäuse (14) und den Membranrohren gasdicht verschweißten Rohrboden (20) vom ersten Gasraum (13) getrennt. Der zweite Rohrboden (21) dient lediglich der Stabilisierung der Membranrohre (15) und braucht mit diesen, nicht gasdicht verbunden zu sein. Es kann sogar vorteilhaft sein, wenn die Rohre zur ungehinderten Wärmeausdehnung im Rohrboden (21) nur lose geführt werden. Der in den Gasraum (19) transportierte Sauerstoff wird über den Wärmetauscher (22) und die Vakuumpumpe (23) dem Verbraucher zugeführt.

Wie bereits erläutert, ist es möglich, die Membran selbsttragend herzustellen. Dazu geht man in der Regel von einem gesinterten und vermahlenen Keramikpulver aus, das dann in an sich bekannter Weise in die entsprechende Form gepreßt und erneut gesintert wird.

So sind z.B. Band- und Spritzgießverfahren bekannt, mit denen Keramikfolien bzw. Keramikformteile hergestellt werden können. Beim Bandgießverfahren wird aus Keramikpulver, Lösungsmittel, Binder und Plastifizierer ein nicht-wäßriger Schlikker gemischt, der auf ein umlaufendes Band gegossen und mit einer justierten Schneide auf eine gleichmäßige Dicke gebracht wird. Die durch Abdunsten des Lösungsmittels gebildete Folie, die eine Dicke von etwa 25-1000 $\mu$m aufweist, kann dann in üblicher Weise weiterverarbeitet werden.

Beim Spritzgießverfahren wird das Keramikpulver mit einem Thermoplastpulver gemischt, bei erhöhter Temperatur in einen viskos-flüssigen Zustand gebracht und unter hohem Druck in die gewünschte Form gespritzt.

In den meisten Fällen wird man jedoch die Membran als dünne Schicht auf einen porösen Träger aufbringen. Auch hierzu sind Verfahren bekannt, wie z.B. Plasma-Spritzverfahren.

Dabei wird das Keramikmaterial in einem Plasmafeld ggf. mit Mikrowellenunterstützung verdampft und kann auf beliebigen Substraten abgeschieden werden. Die Stabilität der Keramikschicht hängt dabei in erster Linie von dem verwendeten Substrat ab.

Grundsätzlich läßt sich eine Keramikbeschichtung jedoch auch durch Aufgießen eines keramischen Schlickers und anschließendes Trocknen und Einbrennen erhalten.

Schließlich kann die Keramikschicht auch nach dem Sol-Gel-Verfahren aufgebracht werden. Dabei wird das poröse Substrat mit einer entsprechenden metallorganischen Lösung getränkt. Durch Aufheizen erfolgt eine Gelbildung und nach Zersetzung der organischen Bestandteile die Bildung des Oxidkeramikfilms.

Bei allen trägergestützten Membranen ist darauf zu achten, daß das Trägermaterial eine durchgehende Porosität aufweist, die möglichst gleichmäßig verteilt ist und Porengrößen von nicht mehr als etwa 1 µm besitzt. Geeignete Trägermaterialien sind z.B. Sintermetalle, poröse Keramik aus oder $Al_2O_3$ oder $Zr O_2$, hochtemperaturbeständige Silicasteine (Schamotte) und poröses Glas. Als Beispiel für eine solche trägergestützte Membran ist in Figur III ein Detail der Vorrichtung nach Figur II gezeigt. Das in Figur II gezeigte Membranrohr (15) besteht danach aus einem porösen Innenrohr (31), das z.B. aus Sintermetall oder einem porösen $Al_2O_3$-Trägerrohr besteht und der aufgespritzten Membran (32). Der Rohrboden (20) ist mit Hilfe der Schweißnaht (33) gasdicht mit dem Innenrohr (31) verbunden, während der Rohrboden (21) das Membranrohr nur lose abstützt.

Vorrichtungen nach der vorliegenden Erfindung können in beliebigen Dimensionen gebaut werden und damit an die jeweiligen Bedürfnisse des Verbrauchers angepaßt werden. Es steht damit ein wertvolles neues Verfahren zur Gewinnung von reinem Sauerstoff zur Verfügung.

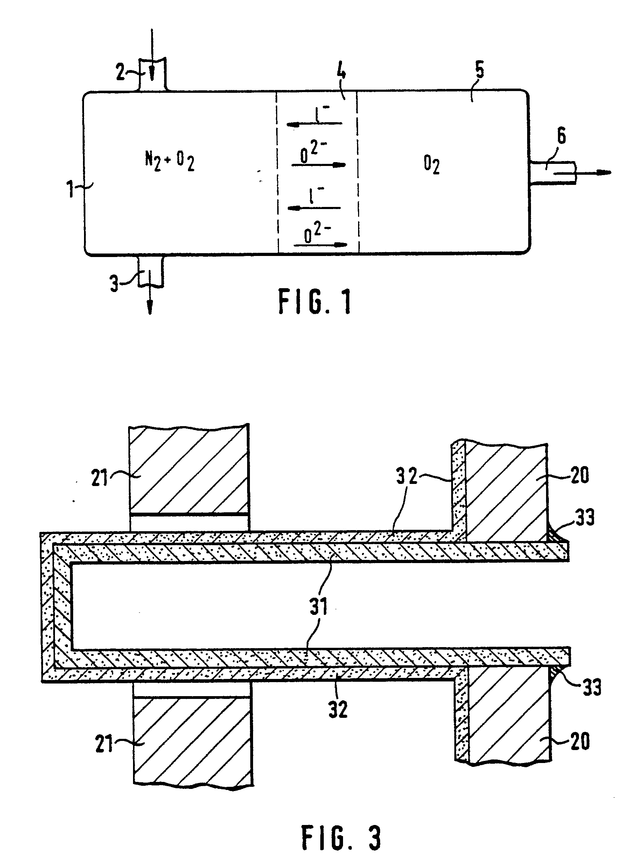

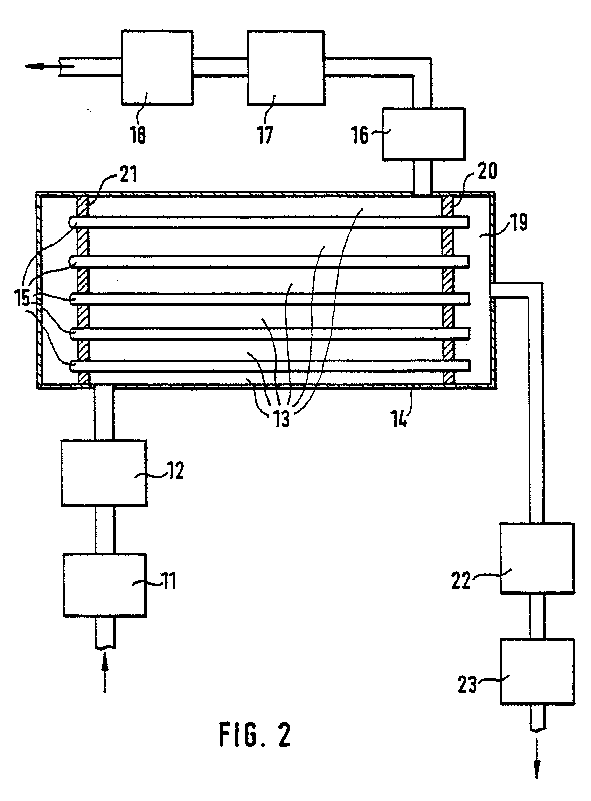

## Ansprüche

1. Vorrichtung zur Gewinnung von reinem Sauerstoff aus sauerstoffenthaltenden Gasgemischen, im wesentlichen bestehend aus einem ersten Gasraum, mit einem Einlaß und einem Auslaß für das sauerstoffenthaltende Gasgemisch, einem zweiten Gasraum mit einem Auslaß für reinen Sauerstoff, einer die beiden Gasräume trennenden Membran, die eine Leitfähigkeit sowohl für Sauerstoffionen als auch für Elektronen aufweist, und Mitteln zur Erzeugung einer Sauerstoffpartialdruckdifferenz zwischen den beiden Gasräumen.

2. Vorrichtung nach Anspruch 1, dadurch gekennzeichnet, daß als Membran ein Keramikmaterial auf Basis von $YBa_2Cu_3O_{7-x}$, $SrCeO_3$ oder $(VO)_2P_2O_7$ enthalten ist.

3. Vorrichtung nach Anspruch 1, dadurch gekennzeichnet, daß sie nach Art eines Platten- oder Rohrwärmetauschers aufgebaut ist.

4. Verfahren zur Gewinnung von reinem Sauerstoff aus sauerstoffenthaltenden Gasgemischen, dadurch gekennzeichnet, daß man das sauerstoffenthaltende Gasgemisch in einen ersten Gasraum bringt, der durch eine gasdichte aber Elektronen und Sauerstoffionen leitende Membran von einem zweiten Gasraum abgetrennt ist, daß man durch Erzeugung eines Überdrucks im ersten Gasraum und/oder Erzeugung eines Unter drucks im zweiten Gasraum für eine positive Sauerstoffpartialdruckdifferenz zwischen erstem und zweitem Gasraum sorgt und daß man reinen Sauerstoff aus dem zweiten Gasraum abzieht.

5. Verfahren nach Anspruch 4, dadurch gekennzeichnet, daß der Sauerstoffpartialdruck im ersten Gasraum mindestens etwa das zweifache bis dreifache des Drucks im zweiten Gasraum beträgt.

6. Verwendung von Membranen mit Elektronen- und Sauerstoffionenleitfähigkeit in Verfahren zur Gewinnung von reinem Sauerstoff.

FIG. 1

FIG. 3

FIG. 2

| | Europäisches Patentamt | **EUROPÄISCHER RECHERCHENBERICHT** | Nummer der Anmeldung |
| --- | --- | --- | --- |
| | | | EP    90 11 1503 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| --- | --- | --- | --- |
| X | GB-A-2082156 (TEIJIN LTD) <br> * Seite 1, Zeilen 48 - 50 * <br> * Seite 1, Zeilen 52 - 53 * <br> * Seite 8, Zeilen 60 - 65 * <br> * Seite 9, Zeilen 13 - 24 * <br> --- | 1, 2, 4, 6 | C01B13/02 <br> B01D71/02 |
| P,X | EP-A-362898 (YEDA RESEARCH AND DEVELOPMENT CO.) <br> * Seite 4, Zeilen 3 - 5 * <br> * Ansprüche 1-3 * <br> --- | 1, 2, 6 | |
| A | CHEMICAL ABSTRACTS, vol. 110, no. 2, 09 Januar 1989 <br> Columbus, Ohio, USA <br> Seite 135; ref. no. 10621G <br> & JP-A-63156515 (Matsushita El. Ind. Co.) 29.06.1988 <br> * Zusammenfassung * <br> ----- | | |
| | | | **RECHERCHIERTE SACHGEBIETE (Int. Cl.5)** <br><br> C01B <br> B01D |
| | Der vorliegende Recherchenbericht wurde für alle Patentansprüche erstellt | | |

| Recherchenort | Abschlußdatum der Recherche | Prüfer |
| --- | --- | --- |
| DEN HAAG | 07 SEPTEMBER 1990 | VAN BELLINGEN I. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)